# Europäisches Patentamt
# European Patent Office
# Office européen des brevets

(11) Veröffentlichungsnummer: **0 219 079**
**A2**

## (12) EUROPÄISCHE PATENTANMELDUNG

(21) Anmeldenummer: **86114091.1**

(22) Anmeldetag: **10.10.86**

(51) Int. Cl.⁴: **G 11 B 23/113**
**G 11 B 15/58**

(30) Priorität: **11.10.85 IT 2245085**

(43) Veröffentlichungstag der Anmeldung:
**22.04.87 Patentblatt 87/17**

(84) Benannte Vertragsstaaten:
**AT BE CH DE ES FR GB LI**

(71) Anmelder: **ROBOTECNICA S.r.l.**
**Via Clerici, 2/4**
**20099 Sesto San Giovani (MI)(IT)**

(72) Erfinder: **Bosco, Angelo**
**Via Kennedy 27**
**I-20097 San Donato Milanese(IT)**

(72) Erfinder: **Magnaghi, Edgardo**
**Via Veneto 11/3bSan Bovio**
**I-20068 Peschiera Borromeo(IT)**

(74) Vertreter: **Vogl, Leo, Dipl.-Ing.**
**c/o AEG Aktiengesellschaft Theodor-Stern-Kai 1**
**D-6000 Frankfurt am Main 70(DE)**

(54) **Vorrichtung zur Konstanthaltung der Spannung eines bewegten Bandes durch einen pneumatischen Druckabfall.**

(57) Es wird eine Vorrichtung vorgestellt zur Konstanthaltung der Spannung eines Bands in Bewegung durch einen Druckabfall, der in einem geschlossenen Behälter hergestellt wird, in dem das Band eine Schleife bildet, in die Schachtel ein- und austritt durch gebogene Elemente geführt und geleitet, um zu vermeiden, daß das Band wegen elektrostatischer Ladung und wegen dem Druckabfall an den inneren Wänden des Behälters festhängt, dafür ist vorgesehen, daß die Verlängerungen der Wände des Behälters die diesbezüglichen gebogenen Elemente zur Führung und Zurückführung kreuzen. Das Element zur Führung und Rückführung in Korrespondenz mit dem Eingang des Behälters ist fix und mit Mitteln versehen, um auf seiner Oberfläche ein Luftkissen zu bilden, auf dem das Band läuft. Dieses Führungselement kann auch mit einem Ablesekopf bestückt sein. Das andere Führungselement ist drehbar mit Leerlauf montiert und kann mit einer Vorrichtung zum Messen der Länge des vorbeilaufenden Bandes bestückt sein.

Fig. 1

0219079

ROBOTECNICA S.r.1., Via Clerici, 2/4, I-20099 Sesto San Giovani (Mi)


ROB 22450


Vorrichtung zur Konstanthaltung der Spannung eines bewegten Bandes durch einen pneumatischen Druckabfall


Vorrichtungen dieser Art finden Verwendung in verschiedenen Bereichen, in denen das Aufwickeln eines Bandes auf einen Träger erfolgt. Ein spezieller Fall der Anwendung, jedoch nicht der einzige ist, die Verwendung der Maschine zum Beladen von Kassetten mit Magnetband, die bespielt wurden oder unbespielt sein können. In diesem Fall werden die einzelnen Magnetbänder, die dazu bestimmt sind, in Kassetten geladen zu werden, nacheinander von einer Spule entnommen, auf der ein Band von mehrfacher Länge des Bandes, das für eine Kassette bestimmt ist, aufgewickelt ist.

Zwischen der Spule und dem Punkt, an dem die Kassetten beladen werden, liegt die Vorrichtung zur Konstanthaltung der Spannung des Bandes, das zu der zu beladenen Kassette läuft. Das Band wird von der Spule in die Vorrichtung mit einer festgelegten Geschwindigkeit eingespeist, und wird von der Vorrichtung auch aktiv mit der gleichen Geschwindigkeit aufgenommen. Die Vorrichtung besteht im wesentlichen aus einem geschlossenen Behälter in der Form eines verlängerten Rechtecks, das an einer seiner einen Schmalseite einen Spalt für den Ein- und Austritt des Bandes aufweist und korrespondierend dazu an der anderen Schmalseite über Einmündungen ins Innere verfügt, um einen Druckabfall zu erzeugen. Die zwei inneren gegenüberliegenden Längsseiten stellen die parallelen Führungswände dar, außerdem sind gebogene Führungs- und Rückführungselemente des Bandes angeordnet, die reziprok gegenüberliegend am Außenteil des Behälters angebracht sind und die Korrespondenz mit besagter Eingangs- und Ausgangsspalte des Bandes stehen. Das Band bildet im Innern eine Schleife, die durch den Unterdruck, der im Behälter selbst erzeugt wird, in Spannung gehalten wird, und dessen Länge reguliert und kontrolliert werden kann, indem man auf die Antriebsaggregate einwirkt, die das Band in den geschlossenen Behälter einspeisen und/oder es aktiv entnehmen.

Auf diese Weise ist es möglich die Spannung des Bandes in dem Teil konstant zu halten, der aus der Vorrichtung bis zum Punkt des Beladens der Kassette austritt, unabhängig von den pannungsveränderungen im Teil der Bandeinspeisung an der Vorrichtung, und daher ohne daß Massen im Spiel sind, wodurch auch eventuelle Beschleunigungen oder Abbremsungen der Laufgeschwindigkeit des Bandes mit der größtmöglichen Einfachheit und Schnelligkeit stattfinden können. Die Elemente der Führung und der Rückführung an der Spalte des Ein- und Austritts des Bandes in und aus dem Behälter können aus festangebrachten Rädern bestehen. Man weiß, daß Bänder aus Plastik, wie die Magnetbänder, die starke Tendenz haben, sich elektrostatisch, speziell bei bestimmten atmosphärischen Bedingungen aufzuladen. Diese Tendenz schafft beachtliche Probleme, da die so elektrostatisch aufgeladenen Bänder dazu neigen, an den Führungswänden im Inneren des Behälters festzukleben und dadurch das gute Funktionieren des Bandlaufs behindern. Diese Tendenz zur Adhäsion an den Wänden wird vomUnterdruck, der im Innern des Behälters erzeugt wird, noch verstärkt.

Um diesem Nachteil zu begegnen wurde schon vorgeschlagen, auf besagten Führungswänden, neben der Spalte für Ein- und Austritt des Bandes, kleine rillenförmige Vorsprünge vorzusehen, über die die Äste des Bandes, die im Inneren des Behälters eine Schleife bilden, hinwegstreichen, um das Band leicht über den Führungswänden laufen zu lassen. Jedoch auch diese Lösung konnte nicht in zufriedenstellender Weise die Gefahr beseitigen, daß das Band in Bewegung an den Führungswänden im Inneren des Behälters für pneumatische Druckerzeugung festklebt.

Ein anderer Nachteil bei dieser Vorrichtung ist der Gebrauch von festen metallischen Teilen, an denen das Band in Bewegung vorbeistreicht. In der Tat erleidet das Band aus Plastik einen gewissen Abrieb auf den festen metallischen Oberflächen, an denen es während seines Laufs vorbeistreift. Diese Oberflächen sind die besagten Führungswände im Inneren des Behälters, und auch die Elemente für Führung und Rückführung, wenn sie fest an . der Ein- und Austrittsspalte des Bandes in und aus dem Behälter montiert sind.

Zweck der vorliegenden Erfindung ist es diese Nachteile zu vermeiden,

und eine Vorrichtung des obengenannten Typs zu schaffen, in der vor allem verhindert wird, daß das Band durch elektrostatische Aufladung an den Führungswänden im Behälter für pneumatische Spannungserzeugung festklebt, und in der auch nach Möglichkeit der Gebrauch von festen Oberflächen an denen das Band in Bewegung vorbeistreift, vermieden wird.

Mit Hinblick auf diesen Zweck gemäß der Erfindung wird eine Vorrichtung wie oben aufgezeigt vorgeschlagen, die dadurch gekennzeichnet ist, daß die Verlängerungen der Flächen, an der besagte parallele Führungswände des Behälters stehen, die diesbezüglichen gebogenen Elemente der Führung und Rückführung des Bandes kreuzen, wodurch das Band, sowohl beim Eintritt in den Behälter, als auch beim Austritt aus demselben, leicht entfernt von den Führungswänden gehalten wird, und die Bandschleife die sich im Inneren des Behälters bildet, befindet sich nur in punktuellem Kontakt mit besagten Führungswänden.

Von Vorteil ist es, wenn eines der besagten Elemente der Führung und Rückführung, und genau das, auf dem das Band bei Eintritt in den pneumatischen Spannungsbehälter läuft, aus einem festmontierten Rad besteht, das Mittel zur Schaffung eines Luftkissens auf der Oberfläche, an der sich das Band bewegt, besitzt,

damit das Band über der Oberfläche schwebt und ein direkter Kontakt vermieden wird. Auf besagter Oberfläche des Führungs- und Rückführungsrads kann außerdem ein Ablesekopf angebracht sein, der fähig ist, Signale, die eventuell auf dem Magnetband vorhanden sind, abzulesen, und das Anhalten der Bewegung des Bandes und seinen Schnitt am Ende jedes Programmes zu steuern, was zyklisch wiederholt wird, wenn eine Kassette vollständig beladen worden ist.

Das zweite der besagten Elemente zur Führung und Rückführung des Bandes, also das, auf welchem das Band aus dem pneumatischen Spannungsbehälter herausläuft, kann aus einer umlaufenden Rolle bestehen, die eventuell mit einer Zählvorrichtung für die Länge des vorbeilaufenden Bandes ausgerüstet ist.

Der pneumatische Spannungsbehälter ist vorzugsweise mit einem von vorne zu öffnenden Deckel, eventuell teilweise transparent, ausgestattet, damit des Laden des Bandes erleichtert ist und man sich nunmehr vom korrekten Funktionierens der Vorrichtung vergewissern kann.

Nachfolgenden wird die Erfindung an Hand der beiliegenden, Zeichnung beschrieben:

Die Fig. 1 der Zeichnung zeigt die Vorrichtung schematisch in Frontansicht.

Fig. 2 zeigt ein Detail davon, teilweise im Schnitt.

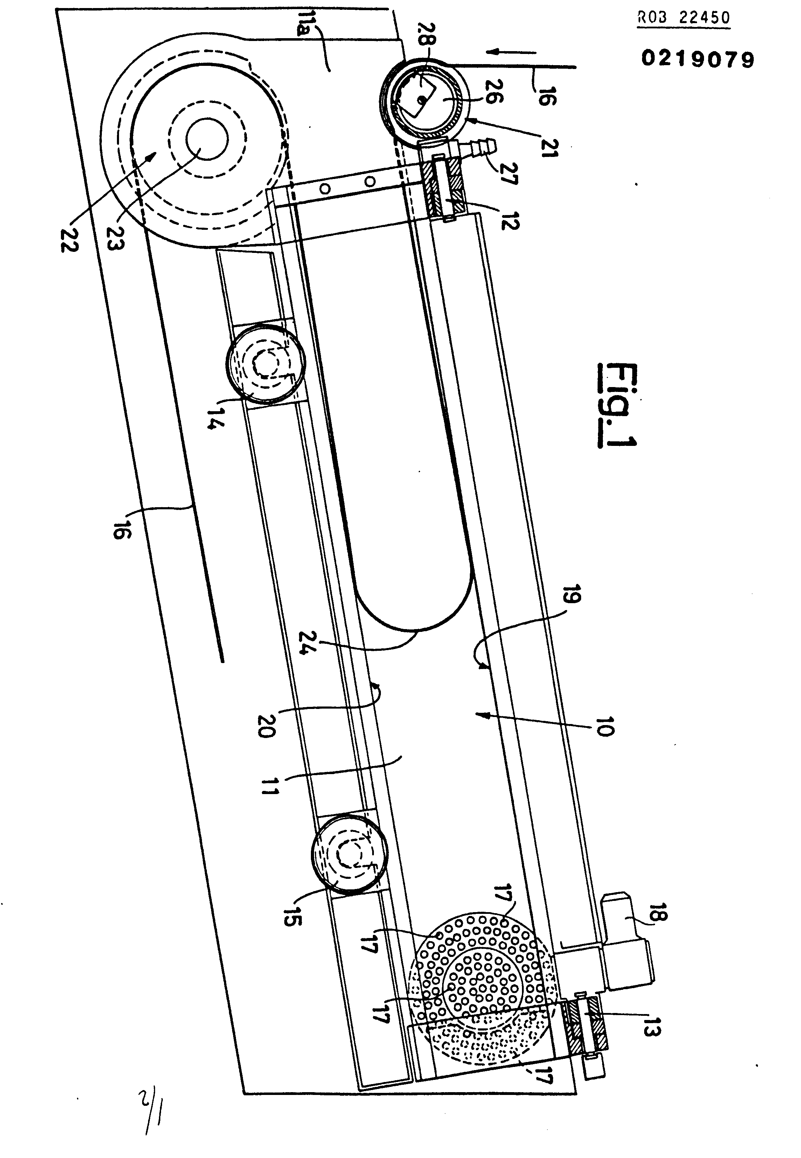

Wie in der Zeichnung dargestellt, besteht die Vorrichtung hauptsächlich aus einem Behälter 10 in der Form eines verlängerten Rechtecks. Der Behälter 10 ist vorne durch einen Deckel 1 verschließbar, der vorzugsweise aus transparentem Material besteht, Scharniere 12, 13 aufweist und in geschlossener Position durch Räder 14, 15 blockierbar ist. An der linken Schmalseite des Behälters, in Fig. 1 dargestellt, ist zwischen dem Deckel 11 und der hinteren Wand des Behälters 10, ein Spalt angeordnet, durch den das Band 16 ein- und austreten kann, in und aus dem inneren Raum des Behälters. An der anderen gegenüberliegenden Schmalseite des Behälters mündet ins Innere des Behälters 10 durch ein Gitter 17 abgedeckt, ein Kanal 18, der mit einer Ansauganlage (nicht dargestellt) verbunden ist. Durch diese Anordnung wird bei geschlossenem Deckel 11 im Innern des Behälters 10 ein Unterdruck erzeugt.

Die zwei gegenüberliegenden Längsseiten des Behälters 10 stellen zwei parallele Führungswände 19, 20 dar. Am Äußeren des Behälters 10 sind zwei gebogene Elemente zur Führung und Rückführung des Bandes 16 vorgesehen, die gegenüberliegende Positionen innehaben, und in Korrespondenz mit der Ein- und Ausgangsspalte des Bandes stehen. Das Element zur Führung und Rückführung, auf dem das Band 16 beim Eintritt in den Behälter 10 läuft, besteht aus einem festangebrachten Rolle 21, während dasjenige, auf dem das Band 16 aus dem Behälter 10 austritt, aus eine Rolle 22 besteht, die freilaufend auf einem Bolzen 23 montiert ist.

Es ist gemäß der vorliegenden Erfindung gekennzeichnet, daß die zwei Rollen 21 und 22 in Bezug auf die Führungswände 19, 20 im Inneren des Behälters 10 so angeordnet sind, daß die Flächen der Wände 19, 20 ------- die diesbezüglichen Rollen 21 und 22 schneiden. Das heißt, ---- dies Rollen 21 und 22 stehen mit ihrer Peripherie teilweise ins Innere besagter gegenüberliegender Flächen der Führungswände 19, 20 vor.

Es ist klar, daß auf diese Weise, während des Betriebs der Vorrichtung, also wenn das Band in Richtung der Pfeile läuft, die Bandschleife, mit 24 angezeigt, im Inneren des Behälters 10 durch den Unterdruck, der im Behälter erzeugt wird, in konstanter Spannung gehalten wird, und leicht entfernt von den Führungswänden 19, 20 bleibt, mit denen sie nur in punktförmigen Kontakt bleibt, wie in der Zeichnung dargestellt.

Dadurch wird vermieden, daß das Band 16, und präzise seine Schleife 24, nicht an den Wänden 19, 20 wegen eventueller elektrostatischer Ladung bzw. des Unterdrucks, der im Inneren des Behälters herrscht, festklebt. Auf diese Weise ist es möglich, das Funktionieren der Vorrichtung die die Bandspannung in seinem austretenden Teil konstant hält, beachtlich zu verbessern und sicherer zu machen.

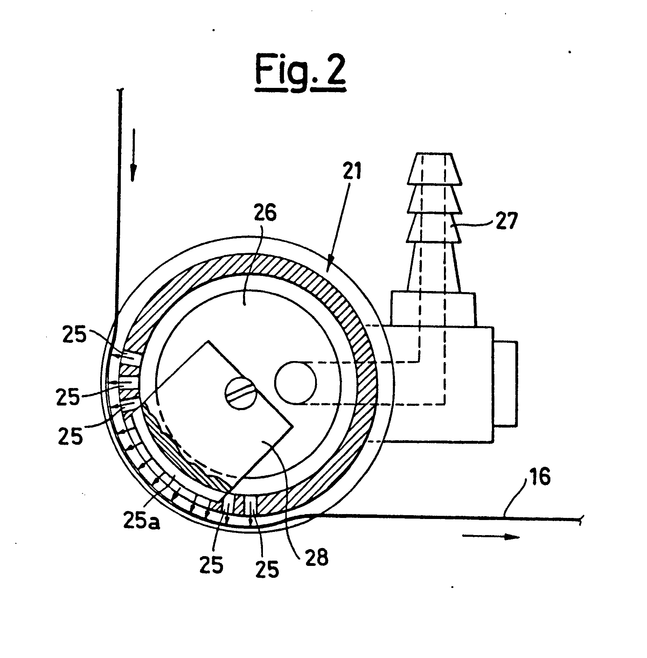

Die freilaufende Rolle 22 kann mit einer Vorrichtung, die, da bekannt, nicht dargestellt ist, zur Messung der Länge des vorbeilaufenden Bandes ausgerüstet sein, und ist zweckmäßigerweise von einer Schutzkappe 11a abgedeckt, die am Deckel 11 befestigt ist. Wie in Figur 2 dargestellt, ist die feste Führungsrolle 21, und zwar der Teil der Peripherie, der vom Band 16 verdeckt ist, mit einer Reihe von Löchern 25 versehen, die den äußeren Umfang mit einem inneren Hohlraum 26 der Rolle verbinden. Dieser Hohlraum ist über ein Verbindungsstück 27 mittels einer nicht dargestellten Zuführung an eine Kompressionsluftquelle angeschlossen. Indem man nun Druckluft durch den Anschluß 27 in den Hohlraum 26 läßt, tritt die Luft aus den Löchern 25 heraus,

und erzeugt so zwischen der äußeren Oberfläche der festen Rolle 21, und dem Band 16 ein Luftkissen, das den direkten Kontakt des Bandes mit der Oberfläche verhindert.Dadurch werden Abrieberscheinungen an der Oberfläche der Führung vermieden , ----- und dem Band wird ein Lauf ohne Reibung gewährleistet.

Auf dem äußeren Teil der Rolle 21, an dem das Band 16 vorbeiläuft, ist außerdem ein Ablesekopf angebracht, mit 28 bezeichnet. Dieser Kopf hat - wenn es sich um vorbespielte Magnetbänder mit festgelegtem, zyklisch wiederholtem Programm handelt - die Aufgabe bestimmte schon vorher aufgenommene Signale vom Band abzulesen, um das Anhalten des Bandlaufs zu steuern und eine geeignete Schnittvorrichtung jedesmal dann zu steuern, wenn eines der besagten Signale abgelesen wird.

Wenn ein solcher Ablesekopf vorgesehen ist, wird weiterhin ein Luftkissen erzeugt, das sich über die äußere Oberfläche des Kopfes durch eine Rille 25a erstreckt, um den direkten Kontakt des Bandes mit dem Kopf zu verhindern, und Reibungs- und Verschleißeffekten vorzubeugen.

## Ansprüche

1. Vorrichtung zur Konstanthaltung der Spannung eines bewegten Bandes mittels pneumatischem Unterdruck, in einen geschlossenen Behälter in Form eines verlängerten Rechtecks, der an einer seiner Schmalseiten eine Ein- und Austrittssplate für das Band aufweist, das im Inneren des Behälters eine Schleife bildet und an der anderen Schmalseite über ins Innere mündende Mittel verfügt, die einen Unterdruck erzeugen, wodurch die Schleife des Bandes in Spannung gehalten wird, außerdem gebogene Elemente zur Führung und Rückführung des Bandes verfügt, die sich am Äußeren des Behälters in Korrespondenz mit besagter Eingangs- und Ausgangsspalte des Bandes gegenüberliegen, dadurch gekennzeichnet, daß die Verlängerungen der Flächen, die besagte parallele Führungswände (19, 20) des Behälters (10) enthalten, die Auflagefläche diesbezügl. gebogene Elemente (Rollen 21, 22) zur Einführung und Rückführung des Bandes überschneiden.

2. Vorrichtung gemäß Anspruch 1, dadurch gekennezichnet, daß das Führungs- und Rückführungselement, auf dem das Band in den Behälter eintritt, aus einer festmontierten Rolle (22) besteht.

3.  Vorrichtung gemäß Anspruch 2, dadurch gekennezichnet, daß die Rolle (21) mit Mitteln (25, 26) versehen ist, die auf dem Teil ihrer Oberfläche, an der das Band vorbeiläuft, ein Luftkissen bilden, das das Band leicht über besagtem Teil der Oberfläche hält.

4.  Vorrichtung gemäß Anspruch 3, dadurch gekennzeichnet, daß an besagtem Teil der Oberfläche der festangebrachten Rolle (21( ein Ablesekopf angebracht ist.

5.  Vorrichtung nach Anspruch 1, dadurch gekennzeichnet, daß das Führungs- und Rückführungselement, auf dem das Band aus dem Behälter austritt aus einer Rolle (22) besteht, die freilaufend auf einem Bolzen (23) sitzt.

6.  Vorrichtung gemäß Anspruch 5, dadurch gekennzeichnet, daß besagte freilaufende Rolle mit einem Zählwerk für die Länge des vorbeilaufenden Bandes ausgerüstet ist.

Fig.1

0219079

ROB 22450

# Fig.2

21
26
27
25
25
25
25a
25
25
28
16